Europäisches Patentamt

European Patent Office

Office européen des brevets

(19)

(11) Veröffentlichungsnummer: **0 376 880**

**A2**

(12) # EUROPÄISCHE PATENTANMELDUNG

(21) Anmeldenummer: **89810921.0**

(22) Anmeldetag: **06.12.89**

(51) Int. Cl.⁵: **B32B 27/04, B32B 7/12**

(30) Priorität: **30.12.88 DE 3844284**

(43) Veröffentlichungstag der Anmeldung:
**04.07.90 Patentblatt 90/27**

(84) Benannte Vertragsstaaten:
**AT BE CH DE ES FR GB GR IT LI LU NL SE**

(71) Anmelder: **Gurit-Essex AG**

**CH-8807 Freienbach(CH)**

(72) Erfinder: **Hälg, Paul, Dr.**
**Bürgliweg 2**
**CH-8805 Richterswil(CH)**
Erfinder: **Braun, Moritz, Dr.**
**Wilhofstrasse 3**
**CH-8125 Zollikerberg(CH)**

(74) Vertreter: **Rottmann, Maximilian R.**
**c/o Rottmann, Zimmermann + Partner AG**
**Glattalstrasse 37**
**CH-8052 Zürich(CH)**

(54) **Schichtkörperanordnung, Verfahren zur Versteifung von flächigen Körpern und versteifter, flächiger Körper.**

(57) Die Erfindung betrifft eine Schichtkörperanordnung (1) zur Versteifung von flächigen Körpern. Die Schichtkörperanordnung umfasst eine Trägerschicht (2), die ein aushärtbares Kunstharzmaterial (4) und gegebenenfalls ein damit verbundenes oder darin eingebettetes Verstärkungsmaterial (3) aufweist. Ferner ist eine auf der Trägerschicht (2) aufgebrachte, dem zu versteifenden Körper zugewandte Klebstoffschicht (5) vorgesehen, die ein gegebenenfalls mit Füllstoffen und sonstigen Additiven versehenes, aushärtbares Kunstharzmaterial umfasst. Um einen möglichst hohen Verstärkungseffekt ohne Deformation des flächigen Körpers zu erreichen, besitzt die Klebstoffschicht (5), nach der Härtung des Kunstharzes, einen höheren Elastizitäts-modul als das gehärtete Kunstharzmaterial der Trägerschicht (2), und die Trägerschicht (2) besitzt, in ausgehärtetem Zustand, zumindest annähernd, die gleiche Wärmedehnzahl wie der zu versteifende flächige Körper.

Fig. 1

# SCHICHTKÖRPERANORDNUNG, VERFAHREN ZUR VERSTEIFUNG VON FLÄCHIGEN KÖRPERN UND VERSTEIFTER, FLÄCHIGER KÖRPER

Die vorliegende Erfindung bezieht sich auf eine Schichtkörperanordnung nach dem Oberbegriff des Patentanspruches 1, auf ein Verfahren zur Versteifung von flächigen Körpern, und auf einen versteiften, flächigen Körper, insbesondere aus Stahl- oder Aluminiumblech oder aus Kunststoff.

Gemäss dem Stand der Technik werden zum Versteifen von Blechteilen, Kunststoff-Formkörpern oder dgl., z.B. von Teilen von Automobil-Karosserien, besondere Schichtkörperanordnungen verwendet. Solche Schichtkörperanordnungen können z.B. aus einer ersten Trägerschicht, d.h. aus der eigentlichen Versteifungsschicht, z.B. einem mit wärmehärtendem Harz gebundenen Glasfasergewebe bestehen, deren eine Oberfläche mit einer zweiten Schicht aus wärmehärtendem, klebrigem Harz versehen ist. Ein derartiger Verbund kann zur Verstärkung von ebenen und gewölbten Blechen verwendet werden, indem ein Stück des Verbundes mit der klebrigen Harzseite auf das Blech aufgelegt und dann thermisch behandelt wird. Dabei erfolgt einerseits eine Verklebung des Schichtkörpers mit dem Blech, und andererseits eine Aushärtung der Harzschichten, so dass zwischen Blech und faserver stärkter Schicht eine schubsteife Verbindung entsteht. Dadurch lässt sich auf einfache Weise, ohne namhaftes zusätzliches Gewicht, eine bedeutende Versteifung der betreffenden Blechpartie erreichen.

Im Interesse einer einfachen Applikation des Versteifungskörpers bildet man die zweite Harz-Schicht im allgemeinen mit klebriger Oberfläche aus, so dass der einmal angebrachte Versteifungskörper bis zur thermischen Behandlung an der betreffenden Stelle des Bleches haftet.

Bei der lokalen Verstärkung von z.B. Karrosserie-Blechen eines Automobils mit derartigen Schichtkörperanordnungen, die zwar auf der Rückseite (unsichtbar) auf dem Blechteil angebracht werden, können erfahrungsgemäss mehr oder weniger gut sichtbare Verformungen der betreffenden Blechpartie entstehen. Dies ist natürlich, insbesondere im Automobilbau, höchst unerwünscht, da diese Verformungen entweder die Aesthetik in einem nicht tolerierbaren Mass beeinträchtigen oder zeit- und arbeitsaufwendige Nachbehandlungen der sichtbaren Blechoberfläche nach sich ziehen.

Der Grund der Verformungen der betreffenden Blechpartie liegt in Spannungen, die bei der Härtung der im allgemeinen aus Kunststoffmaterialien aufgebauten Schichtkörperanordnung entstehen. Insbesondere ist hervorzuheben, dass einerseits bei der Aushärung eines Kunstharzes eine gewisse Volumenschrumpfung eintritt, und dass andererseits, bei hitzehärtenden Kunststoffmaterialien, bei der Abkühlung nach der thermischen Aushärtung, eine unterschiedliche Wärmedehnzahl zwischen zu versteifendem Körper und Schichtkörperanordnung gegeben ist.

Gemäss der Offenbarung der EP-B1-0 053 361 sollen diese Probleme durch eine Klebefolie gelöst werden, die aus einer ersten Schicht aus einer Epoxyharzzusammensetzung und einer darauf laminierten, zweiten Schicht einer Epoxyharzzusammensetzung besteht, die die folgenden charakteristischen Eigenschaften aufweist:

a. Die erste Schicht, d.h. die eigentliche Verstärkungsschicht (bzw. Trägerschicht in der Terminologie der vorliegenden Anmeldung), muss einen vergleichsweise hohen E-Modul im Bereich von 30 - 500 kg/mm² aufweisen, nachdem sie auf die Metallplatte aufgetragen und ausgehärtet ist.

Es geht aus der genannten Veröffentlichung klar hervor, dass diese Schicht die eigentliche Aufgabe der Versteifung übernimmt.

b. Die zweite Schicht, d.h. die Klebeschicht zur Befestigung der eigentlichen Versteifungsschicht auf den zu versteifenden, flächigen Körper, muss einen vergleichsweise niedrigen E-Modul im Bereich von 0,1 bis 22 kg/mm² aufweisen. Dabei ist in der genannten Veröffentlichung expressis verbis herausgestellt, dass der E-Modul dieser Klebeschicht derart niedrig sein soll, dass er zur Versteifung des flächigen Körpers nicht ausreicht.

Damit lässt sich zwar eine sichtbare Verformung des zu versteifenden Körpers, z.B. eines Automobil-Blechteiles wie einer Türe, eines Kofferraumdeckels etc. vermeiden. Ausserdem bewirkt die äussere, erste Schicht, die einen vergleichsweise hohen E-Modul aufweist, den eigentlichen Verstärkungseffekt. Die zweite, dem zu versteifenden Körper zugewandte Schicht (d.h. die Klebeschicht) besitzt einen derart tiefen E-Modul, dass sie den zu versteifenden Körper nicht verformen kann.

Ein Nachteil dieser Anordnung ist insbesondere darin zu sehen, dass der Versteifungseffekt wegen des vergleichsweise niedrigen E-Moduls der Klebeschicht eher schwach ist. Eine schubsteife Verbindung zwischen der eigentlichen Versteifungsschicht und dem zu versteifenden Körper lässt sich dadurch nicht erreichen.

Es ist die Aufgabe der vorliegenden Erfindung, ausgehend von einer mindestens zweischichtigen Schichtkörperanordnung mit einer Trägerschicht, die ein aushärtbares Kunstharzmaterial und gegebenenfalls ein damit verbundenes oder darin eingebettetes Verstärkungsmaterial umfasst, und mit einer auf der Trägerschicht aufgebrachten Klebeschicht, die ebenfalls ein gegebenenfalls mit Füllstoffen oder sonstigen Additiven versehenes, aushärtbares Kunstharzmaterial aufweist, eine Schichtkörperanordnung zur Versteifung von flächigen Körpern zu schaffen, welche gleichzeitig eine verbesserte Versteifung des flächigen Körpers erlaubt und andererseits eine Verformung desselben nach dem Aushärten der Schichtkörperanordnung ausschliesst.

Gemäss der Erfindung wird diese Aufgabe durch die Kombination der folgenden Merkmale gelöst:

a. Die Klebstoffschicht besitzt, nach der Härtung des Kunstharzmaterials, einen höheren E-Modul als das gehärtete Kunstharzmaterial der Trägerschicht.

b. Die Trägerschicht besitzt, in ausgehärtetem Zustand, zumindest annähernd die gleiche Wärmedehnzahl wie der zu versteifende flächige Körper.

Unter dem Begriff "Elastizitätsmodul" bzw. "E-Modul" soll in der ganzen Beschreibung und in den Ansprüchen der Elastizitätsmodul aus dem Zugversuch verstanden werden.

Die von der Anmelderin durchgeführten Versuche haben klar gezeigt, dass die Verformung z.B. eines Bleches in erster Linie beim Abkühlen nach der Hitzehärtung durch die unterschiedlichen Wärmedehnzahlen der beiden Materialien, im Beispielsfall von zu versteifendem Metallkörper und zur Versteifung dienender Kunst stoff, verursacht wird. Die Volumenschrumpfung spielt offensichtlich eine untergeordnete Rolle, da sie sich oberhalb des Glasübergangsbereichs abspielt, wo kaum Kräfte übertragen werden können.

Dadurch kann nun ein z.B. zweischichtiger Versteifungskörper aufgebaut werden, derart, dass sich nach dessen Applikation auf das zu versteifende Blech und nach dessen Aushärtung ein bezüglich Wärmedehnung symmetrischer Verbund Blech-Klebstoffschicht-Verstärkungsschicht ergibt. Es versteht sich, dass dazu die Verstärkungsschicht die gleiche Wärmedehnzahl aufweisen muss wie das zu verstärkende Blech. Während des Abkühlvorganges kontrahieren unter diesen Voraussetzungen Blech einerseits und Verstärkungsschicht andererseits gleichmässig, so dass keine Verformungen des Bleches auftreten können. Die Kontraktion der Klebeschicht wird wegen der vorhandenen Symmetrie in sich ausgeglichen und hat keinen nachteiligen Effekt auf die Form des zu verstärkenden Bleches.

Durch die Massnahme, dass die Klebstoffschicht nach der Härtung des in ihr vorhandenen Kunstharzes einen höheren E-Modul besitzt als das gehärtete Kunstharzmaterial der Trägerschicht, und durch die Tatsache, dass das für die Trägerschicht verwendete Kunstharzmaterial nach freiem Ermessen mit Verstärkungsmaterialien versehen werden kann, ergibt sich die Möglichkeit, die Wärmedehnzahl der Trägerschicht in einem weiten Bereich an diejenige des zu versteifenden flächigen Körpers anzupassen. Die Kombination "Kunstharzmaterial der Trägerschicht + Verstärkungsmaterial" besitzt hingegen einen höheren E-Modul als die Klebstoffschicht. Damit ist gewährleistet, insbesondere wenn die Unterschiede bezüglich des E-Moduls von Klebstoffschicht einerseits und Trägerschicht andererseits nicht allzu gross sind, dass zwischen der Trägerschicht und dem zu versteifenden flächigen Körper eine schubsteife Verbindung hergestellt wird, die einen ausgeprägten Verstärkungseffekt des flächigen Körpers gewährleistet.

Die Wärmedehnzahl der Verstärkungsschicht kann sehr einfach über das Volumenverhältnis "Kunstharzmaterial:Verstärkungsmaterial" eingestellt werden.

Als Verstärkungsmaterial ist insbesondere ein Glasfasergewebe geeignet. Dabei hat es sich gezeigt, dass im Fall von zu versteifendem Stahlblech (was in der Praxis der häufigste Fall sein dürfte) ein Gewichtsverhältnis von, grob gesagt, etwa 50:50 anzustreben ist, vorzugsweise etwa 48 Vol.-% Glasfasergewebe zu 52 Vol.-% Kunstharzmaterial.

In der Praxis geht man erfindungsgemäss folgendermassen vor, um einen flächigen Körper zu versteifen:

Zunächst wird die Wärmedehnzahl des zu versteifenden, flächigen Körpers bestimmt.

Dann wird eine Trägerschicht hergestellt, bestehend aus einem härtbaren Kunstharzmaterial und einem damit verbundenen oder darin eingebetteten Verstärkungsmaterial, wobei das anteilige Verhältnis Kunstharzmaterial:Verstärkungsmaterial derart gewählt wird, dass die Trägerschicht, nach ihrer Härtung, zumindest annähernd die gleichen Wärmedehnzahl aufweist wie der zu versteifende, flächige Körper.

Anschliessend wird eine derartige Klebstoffschicht auf die Trägerschicht aufgebracht, die ein härtbares Kunstharzmaterial umfasst und die, nach der Härtung des Kunstharzmaterials, gesamthaft einen höheren Elastizitätsmodul aufweist als das gehärtete Kunstharzmaterial der Trägerschicht.

Die so hergestellte Schichtkörperanordnung wird auf dem zu versteifenden, flächigen Körper befestigt, derart, dass die Klebstoffschicht dem zu versteifenden Körper zugewandt ist, und die befestigte Schichtkörperanordnung wird, z.B. mit Wärme, behandelt, um die Kunstharzmaterialien der Träger- und der Klebstoffschicht auszuhärten und die Schichtkörperanordnung fest mit dem zu versteifenden Körper zu verbinden.

Bevorzugte Ausführungsformen und Weiterbildungen der erfindungsgemässen Schichtkörperanordnung sind in den abhängigen Ansprüchen 2 bis 19 beschrieben; das erfindungsgemässe Verfahren ist in Anspruch 20 definiert, wobei vorteilhafte Ausführungsarten des Verfahrens Gegenstand der Ansprüche 21 und 22 bilden.

Im folgenden soll die Erfindung anhand eines Beispiels erläutert werden.

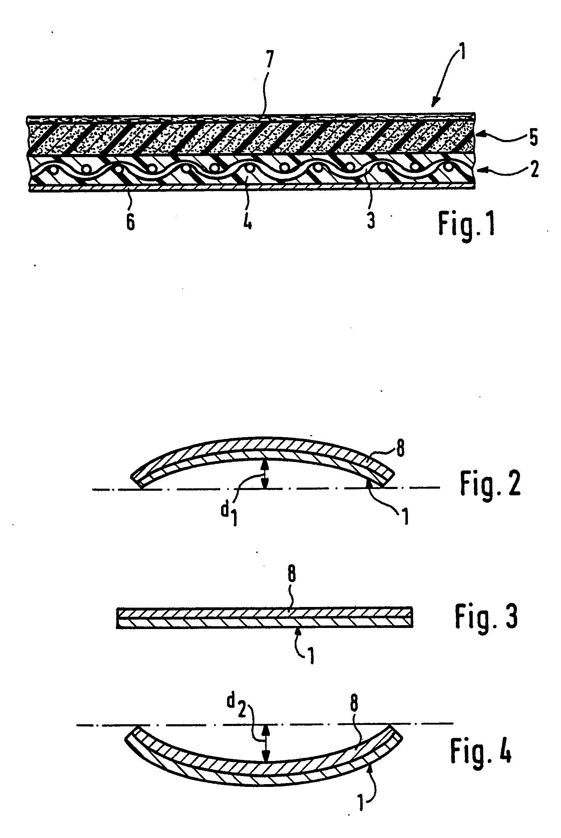

Es wurde eine Schichtkörperanordnung hergestellt, die im Schnitt schematisch in Fig. 1 gezeigt ist. Die generell mit 1 bezeichnete Schichtkörperanordnung, wie sie vor dem Aufbringen auf einen flächigen, zu versteifenden Körper vorliegt, hat folgenden, generellen Aufbau:

Die Trägerschicht 2 besteht aus einem Glasfasergewebe 3, z.B. aus einem Glasrovinggewebe mit einem spezifischen Gewicht von 620 g/m². Das Glasfasergewebe 3 ist eingebettet in eine Kunststoffschicht 4, die aus einem wärmehärtenden Kunstharz besteht. Als geeignete Materialien können angeführt werden:

- Zusammensetzung a)

90 Teile flüssiges Epoxiharz
(z.B. Epikote 828 von Shell)
10 Teile Dicyandiamid

- Zusammensetzung b)

90 Teile verdünntes Epoxiharz
(z.B. Epikote 215 von Shell)
10 Teile Dicyandiamid

Zusammensetzung c)

60 Teile festes Epoxidharz
(z.B. Epikote 1001 von Shell)
5 Teile Dicyandiamid
35 Teile Methylethylketon
(dient als Lösungsmittel für die Imprägnierung; wird nachher adgedampft)

Durch geeignete Wahl des Kunstharz-Materials und der Füllstoffe wurde der E-Modul des Harzes, wenn es ausgehärtet ist, auf einen Wert von 2100 N/mm² eingestellt. Der Vol.-% Anteil des Glases in der Schicht 2 wurde versuchsweise variiert, wie nachstehend noch erklärt werden wird. Die Dicke der Schicht 2 betrug ca. 0.6 mm.

Auf diese Schicht 2 wurde eine Klebstoffschicht 5 aufgebracht, die im wesentlichen aus einem wärmehärtenden, selbsthaftenden Kunstharz besteht. Als geeignete Materialien können angeführt werden:

- Zusammensetzung a)

30 Teile flüssiges Epoxidharz (z.B. Epikote 828)
20 Teile festes Epoxidharz (z.B. Epikote 1001)
4 Teile Dicyandiamid
20 Teile Talkum
26 Teile Flugasche (Fillite)

Zusammensetzung b)

35 Teile flüssiges Epoxidharz (z.B. Epikote 828)
25 Teile festes Epoxidharz (z.B. Epikote 1001)
5 Teile Dicyandiamid
5 Teile Glimmer
30 Teile Talkum

Durch geeignete Wahl des Kunstharz-Materials und der Füllstoffe wurde der E-Modul des Harzes, wenn es ausgehärtet ist, auf einen Wert von 3700 N/mm² eingestellt. Dieser Wert liegt deutlich höher als der E-Modul-Wert des für die Schicht 2 verwendeten Harzes. Die Dicke der Schicht 5 betrug ca. 0.6 mm.

Der E-Modul-Wert der ausgehärteten Schicht 2 andererseits, d.h. die Kombination Harz und Glasfasergewebe, betrug, je nach Glasanteil, jedenfalls mehr als 5000 N/mm². Durch das Volumenverhältnis Harz:Glasfasergewebe kann insbesondere auch der Wärmedehnungskoeffizient eingestellt werden.

Die Rückseite der Schicht 2 wurde mit einer Aluminiumfolie 6 mit einer Dicke von ca. 20 um bedeckt, währenddem die klebrige Vorderseite der Schicht 5, bei noch unbenutzter Schichtkörperanordnung 1, mit einem abziehbaren Schutzpapier 7 bedeckt ist.

Mit dieser Schichtkörperanordnung wurden folgende Versuche durchgeführt:

VERSUCH 1

Ein planer Streifen aus Stahlblech 8 mit den Abmessungen 400 mm Länge, 25 mm Breite und 0.75 mm Dicke wurde mit einem Schichtkörper 1 der vorstehend beschriebenen und in Fig. 1 dargestellten Art versehen. Die Gesamtdicke der Schichtkörperanordnung 1 betrug 1.6 mm. Der Volumen-Anteil des Glasfasergewebes 3 in der Schicht 2 der Schichtkörperanordnung 1 betrug 51 %. Nach dem Aufkleben wurde der Verbund Stahlblech 8/Schichtkörper 1 während 30 min bei 180°C einer Wärmebehandlung unterzogen. Die resultierende Verbiegung $d_1$ des Verbundes in Richtung der Blechseite (in Fig. 2 stark übertrieben dargestellt) betrug 1.8 mm. Dies ist darauf zurückzuführen, dass der Wärmedehnungs-Koeffizient der Verstärkungsschicht 2 des Schichtkörpers 1 kleiner war als derjenige des Stahlblechstreifens 8.

VERSUCH 2

Es wurden dieselbe Versuchsanordnung und dieselben Bedingungen angewandt wie bei Versuch 1, mit dem Unterschied, dass der Volumen-Anteil des Glasfasergewebes 3 in der Schicht 2 der Schichtkörperanordnung 1 48 % betrug. Gemäss Fig. 3 hat sich der Verbund Stahlblech 8/Schichtkörper 1 nicht verformt, d.h. eine allfällige Verformung lag unter der Messtoleranz von 0.1 mm.

## VERSUCH 3

Es wurden dieselbe Versuchsanordnung und dieselben Bedingungen angewandt wie bei Versuch 1, mit dem Unterschied, dass der Volumen-Anteil des Glasfasergewebes 3 in der Schicht 2 der Schichtkörperanordnung 1 44 % betrug. Die resultierende Verbiegung $d_2$ des Verbundes Stahlblech 8/Schichtkörper 1 in Richtung der Schichtkörperseite (in Fig. 4 stark übertrieben dargestellt) betrug 2.6 mm. Dies ist darauf zurückzuführen, dass die Wärmedehnzahl der Verstärkungsschicht 2 des Schichtkörpers 1 grösser war als diejenige des Stahlblechstreifens 8.

## VERSUCH 4

Auf ein Stahlblech mit den Dimensionen 200 x 200 x 0.75 mm wurde eine Probe des Schichtkörpers aus dem Versuch 2 mit den Dimensionen 80 x 80 mm aufgebracht. Nach der Wärmebehandlung während 30 min bei 180° C konnte von Auge keine Verformung des Bleches festgestellt werden.

## VERSUCH 5

Ein Stahlblechstreifen ohne aufgebrachten Schichtkörper 1 mit den Abmessungen 150 mm Länge, 25 mm Breite und 0.75 mm Dicke wurde symmetrisch im Abstand von 100 mm abgestützt. Dann wurde die im Zentrum der Probe angreifende Kraft $F_0$ gemessen, die erforderlich ist, um den Stahlblechstreifen um 10 mm durchzubiegen. Anschliessend wurde der Versuch wiederholt mit einem Stahlblechstreifen mit den gleichen Abmessungen, der mit einem Schichtkörper gemäss Versuch 1 versehen war. Die zur Durchbiegung des verstärkten Stahlblechstreifens um 10 mm erforderliche Kraft betrug $F_v$. Der Verstärkungsfaktor, gebildet als Division $F_v/F_0$, betrug 9.4.

## VERSUCH 6

Ein Stahlblechstreifen ohne aufgebrachten Schichtkörper 1 mit den Abmessungen 150 mm Länge, 25 mm Breite und 0.75 mm Dicke wurde symmetrisch im Abstand von 100 mm abgestützt. Dann wurde die im Zentrum der Probe angreifende Kraft $F_0$ gemessen, die erforderlich ist, um den Stahlblechstreifen um 10 mm durchzubiegen. Anschliessend wurde der Versuch wiederholt mit einem Stahlblechstreifen mit den gleichen Abmessungen, der mit einem Schichtkörper gemäss Versuch 2 versehen war. Die zur Durchbiegung des verstärkten Stahlblechstreifens um 10 mm erforderliche Kraft betrug $F_v$. Der Verstärkungsfaktor, gebildet als Division $F_v/F_0$, betrug 9.1.

## VERSUCH 7

Ein Stahlblechstreifen ohne aufgebrachten Schichtkörper 1 mit den Abmessungen 150 mm Länge, 25 mm Breite und 0.75 mm Dicke wurde symmetrisch im Abstand von 100 mm abgestützt. Dann wurde die im Zentrum der Probe angreifende Kraft $F_0$ gemessen, die erforderlich ist, um den Stahlblechstreifen um 10 mm durchzubiegen. Anschliessend wurde der Versuch wiederholt mit einem Stahlblechstreifen mit den gleichen Abmessungen, der mit einem Schichtkörper gemäss Versuch 3 versehen war. Die zur Durchbiegung des verstärkten Stahlblechstreifens um 10 mm erforderliche Kraft betrug $F_v$. Der Verstärkungsfaktor, gebildet als Division $F_v/F_0$, betrug 9.1.

Die Schlussfolgerungen, die sich aus diesen Versuchen ziehen lassen, können wie folgt zusammengefasst werden:

1. Bei allen Versuchen (1-3 bzw. 5-7) liess sich grundsätzlich eine deutlich höhere Verstärkungswirkung der Blechprobe erreichen als nach dem Stand der Technik (z.B. gemäss EP-Bl-0 053 361).

2. Durch die erfindungsgemässe Ausbildung der Trägerschicht und der Klebstoffschicht, wie in Versuch 2 und 6, ist keine Deformation der Blechprobe zu beobachten.

3. Durch die erfindungsgemässe Ausbildung der Trägerschicht und der Klebstoffschicht, wie z.B. in Versuch 6, ist nur eine unwesentliche Abnahme des Verstärkungsfaktors (9.1 gegenüber 9.4) gegenüber dem Versuch 5 zu beobachten.

## Ansprüche

1. Schichtkörperanordnung (1) zur Versteifung von flächigen Körpern (8), mit einer Trägerschicht (2), die ein aushärtbares Kunstharzmaterial (4) und ein damit verbundenes oder darin eingebettetes Verstärkungsmaterial (3) umfasst, und mit einer auf der Trägerschicht (2) aufgebrachten, dem zu versteifenden Körper (8) zugewandten Klebstoffschicht (5), die ein gegebenenfalls mit Füllstoffen und sonstigen Additiven versehenes, aushärtbares Kunstharzmaterial umfasst, gekennzeichnet durch die Kombination der folgenden Merkmale:

a. Die Klebstoffschicht (5) besitzt nach der Härtung des Kunstharzes einen höheren Elastizitäts-Modul als das gehärtete Kunstharzmaterial der Trägerschicht (2).

b. Die Trägerschicht (2) besitzt in ausgehärtetem Zustand, zumindest annähernd die gleiche Wärmedehnzahl wie der zu versteifende flächige Körper (8).

2. Schichtkörperanordnung nach Patentanspruch 1, dadurch gekennzeichnet, dass die Klebstoffschicht (5) ein Epoxyharz umfasst.

3. Schichtkörperanordnung nach Patentanspruch 2, dadurch gekennzeichnet, dass die Klebstoffschicht (5) selbsthaftend ist.

4. Schichtkörperanordnung nach Patentansprüchen 2 und/oder 3, dadurch gekennzeichnet, dass die Klebstoffschicht durch eine hitzehärtende Einkomponenten-Formulierung gebildet ist.

5. Schichtkörperanordnung nach einem der Patentansprüche 2-4, dadurch gekennzeichnet, dass die Klebstoffschicht (5) neben dem Epoxyharz als Füllstoffe einen oder mehrere der Stoffe der nachfolgenden Gruppe enthält: Talkum, Kreide Glimmer, Silikate, Aluminiumoxid, Flugasche, Glashohlkugeln, Glaskugeln.

6. Schichtkörperanordnung nach einem der Patentansprüche 2-5, dadurch gekennzeichnet, dass die Klebstoffschicht (5) einen Elastizitätsmodul im Bereich von 2500 bis 6000 N/mm² aufweist.

7. Schichtkörperanordnung nach Patentanspruch 6, dadurch gekennzeichnet, dass die Klebstoffschicht (5) einen Elastizitätsmodul im Bereich von 3000 bis 4500 N/mm², vorzugsweise etwa 3500 bis 4000 N/mm² aufweist.

8. Schichtkörperanordnung nach einem der vorhergehenden Patentansprüche, dadurch gekennzeichnet, dass die Klebstoffschicht (5) eine Dicke von 0.3 bis 2.0 mm, vorzugsweise eine Dicke von etwa 0.7 mm aufweist.

9. Schichtkörperanordnung nach einem der vorhergehenden Patentansprüche, dadurch gekennzeichnet, dass die Trägerschicht (2) ein Kunstharzmaterial aufweist, das einen Elastizitätsmodul, in ausgehärtetem Zustand, von weniger als 2500 N/mm² besitzt.

10. Schichtkörperanordnung nach Patentanspruch 9, dadurch gekennzeichnet, dass die Trägerschicht (2) ein Kunstharzmaterial aufweist, das einen Elastizitätsmodul, in ausgehärtetem Zustand, von 1800 - 2400 N/mm², vorzugsweise etwa 2100 N/mm² besitzt.

11. Schichtkörperanordnung nach Patentansprüchen 1, 9 und 10, dadurch gekennzeichnet, dass die Trägerschicht (2) durch ein mit dem Kunstharzmaterial (4) getränktes oder imprägniertes Glasfasergewebe (3) gebildet ist.

12. Schichtkörperanordnung nach Patentansprüchen 1, 9 und 10, dadurch gekennzeichnet, dass die Trägerschicht (2) durch eine Schicht des Kunstharzmaterials (4) gebildet ist, in welcher ein Glasfasergewebe (3) eingebettet ist.

13. Schichtkörperanordnung nach Patentansprüchen 1, 9 und 10, dadurch gekennzeichnet, dass die Trägerschicht (2) durch eine Schicht des Kunstharzmaterials (4) gebildet ist, auf welches ein Glasfasergewebe (3) aufgepresst ist.

14. Schichtkörperanordnung nach einem der Patentansprüche 11 bis 13, dadurch gekennzeichnet, dass das Verhältnis Glasfasergewebe (3)-:Kunstharzmaterial (4), in Volumen-Anteilen, im Bereich zwischen 40:60 und 60:40 liegt.

15. Schichtkörperanordnung nach einem der Patentansprüche 11 bis 13, dadurch gekennzeichnet, dass das Verhältnis Glasfasergewebe (3)-:Kunstharzmaterial (4), in Volumen-Anteilen, im Bereich zwischen 45:55 und 55:45 liegt.

16. Schichtkörperanordnung nach einem der Patentansprüche 11 bis 13, dadurch gekennzeichnet, dass das Verhältnis Glasfasergewebe (3)-:Kunstharzmaterial (4), in Volumen-Anteilen, vorzugsweise 48:52 beträgt.

17. Schichtkörperanordnung nach einem der vorhergehenden Ansprüche, dadurch gekennzeichnet, dass die ausgehärtete Trägerschicht (2) einen höheren Elastizitäts-Modul besitzt als die ausgehärtete Klebstoffschicht (5).

18. Schichtkörperanordnung nach Patentanspruch 17, dadurch gekennzeichnet, dass die ausgehärtete Trägerschicht (2) einen Elastizitäts-Modul von mehr als 5000 N/mm² besitzt.

19. Schichtkörperanordnung nach einem der vorhergehenden Patentansprüche, dadurch gekennzeichnet, dass die Trägerschicht (2) eine Dicke von 0.1 bis 2.0 mm, vorzugsweise 0.3 bis 0.8 mm aufweist.

20. Verfahren zur Versteifung von flächigen Körpern (8) mit Hilfe einer Schichtkörperanordnung (1) nach einem der Patentansprüche 1 - 19, gekennzeichnet durch die folgenden Verfahrensschritte:

a. Bestimmen der Wärmedehnzahl des zu versteifenden, flächigen Körpers (8).

b. Herstellen einer Trägerschicht (2), bestehend aus einem härtbaren Kunstharzmaterial (4) und einem damit verbundenen oder darin eingebetteten Verstärkungsmaterial (3), wobei das anteilige Verhältnis Kunstharzmaterial (4)-:Verstärkungsmaterial (3) derart gewählt wird, dass die gehärtete Trägerschicht (2) zumindest annähernd die gleiche Wärmedehnzahl aufweist wie der zu versteifende, flächige Körper (8).

c. Aufbringen einer derartigen Klebstoffschicht (5) auf die Trägerschicht, die ein härtbares Kunstharzmaterial umfasst und die nach der Härtung des Kunstharzmaterials gesamthaft einen höheren Elastizitätsmodul aufweist als das gehärtete Kunstharzmaterial (4) der Trägerschicht (2).

d. Befestigen der nach den Schritten b. und c. hergestellten Schichtkörperanordnung (1) auf dem zu versteifenden, flächigen Körper (8), derart, dass die Klebstoffschicht (5) dem zu versteifenden Körper (8) zugewandt ist.

e. Behandlung der befestigten Schichtkörperanordnung (1), um die Kunstharzmaterialien der Träger- und der Klebstoffschicht (2 bzw. 5) auszuhärten und die Schichtkörperanordnung (1) fest mit dem zu versteifenden Körper (8) zu verbinden.

21. Verfahren nach Anspruch 20, dadurch gekennzeichnet, dass wärmehärtende Kunstharzmaterialien in der Träger- und Klebstoffschicht (2 bzw. 5) verwendet werden.

22. Verfahren nach Anspruch 19 und 20, dadurch gekennzeichnet, dass die Schichtkörperanordnung (1), die auf dem zu versteifenden, flächigen Körper (8) angebracht wurde, während 15 - 60 min., vorzugsweise während 30 min. mit einer Temperatur von 80 - 240° C, vorzugsweise mit einer Temperatur von 150 - 200° C behandelt wird, um die wärmehärtenden Kunststoffmaterialien in der Träger- und Klebstoffschicht (2 bzw. 5) auszureagieren.

23. Versteifter, flächiger Körper (8), insbesondere aus Stahl- oder Aluminiumblech oder aus Kunststoff, dadurch gekennzeichnet, dass er mit einer Schichtkörperanordnung (1) nach einem der Patentansprüche 1 bis 19 versehen ist.

Fig.1

Fig. 2

Fig. 3

Fig. 4